# EUROPEAN PATENT APPLICATION

(11) **EP 4 231 371 A1**
(43) Date of publication of application: **23.08.2023**
(21) Application number: 22186881.3
(22) Date of filing: 26.07.2022
(51) Int. Cl.: H01M 4/04, H01M 4/48, H01M 4/58, H01M 4/62, H01M 10/05, H01M 10/0585, H01M 4/02

(54) **A POROUS FREE-STANDING FLEXIBLE THICK ELECTRODE SHEET AND ITS PREPARATION METHOD**

(30) Priority: 22.02.2022 CN 202210160505
(71) Applicant: Zonke Seno Technology Co., Ltd., Suzhou City, Jiangsu Province 215400 (CN)
(72) Inventor: ZENG, Shimeng, Suzhou City, 215400 (CN); TIAN, Jianliya, Suzhou City, 215400 (CN); HE, Shiyang, Suzhou City, 215400 (CN)
(74) Representative: Bryn Aarflot AS

(57) **Abstract**

The present invention provides a porous free-standing flexible thick electrode, its fabrication method, and an aqueous hybrid ion battery made with said electrode. This free-standing flexible thick electrode provides a flexible thick electrode sheet characterized by an active material load of 0.01 - 2 g/cm2, a thickness range from 0.01 - 4 mm, porosity range from 15-60%, tensile strength range from 0.2 - 5 MPa, tensile elongation at break range from 5-25%, volume resistivity range from 0.1 - 10 Ω·cm, tolerance of pH 2-13, a width of 0.01 - 2 m, and an unrestricted length, even tens of meters.

## Description

### Field of the invention

The present invention relates to the field of electrochemistry, more specifically, to the structure design and manufacture of electrode film made from ceramic powder particles and to be used in rechargeable batteries such as aqueous hybrid ion battery, fuel cell, super capacitor and other kinds of battery.

### Background

At present, typical electrode manufacturing techniques for use in an electrochemical cell include the formation of an active electrode material that is then coated or extruded onto a conductive substrate. The active electrode material is mixed with a binder that serves to associate the precursor materials. To assist in formation of a proper electrode, additives such as solvents, plasticizers, carbon materials are used to form a wet slurry that can effectively be coated onto a conductive substrate. A conventional battery includes two electrodes (named anode and cathode), which are separated by a porous separator. The separator prevents an electric current from shorting the two electrodes. Both the electrodes and the porous separator are immersed in an electrolyte, which allows an ionic current to flow between the electrodes and through the separator. The most widely used methods to make an electrode for rechargeable batteries are a wet-coating process and a dry process.

For a wet-coating process, a polymer binder is dissolved in a solvent and cross-linked with the surrounding particles. Once solvent is removed, the polymers become sticky and provide adhesion to a substrate or cohesion between particles. Unfortunately, a drying process is insufficient under the short timeframes of common manufacturing conditions. This may result in residual additive and impurities remaining in the electrode. Dry binder formulations have been used to reduce or eliminate the drying step by incorporating an additive into the binder that, when subjected to high shear mixing, serves to fibrillate the binder (See Chinese Invention Patent Application No. CN1838999A). The fibrillated binder creates a web-like structure that holds the materials together, thus reducing cost and eliminating a time-consuming drying process. Despite these advancements, relatively poor porosity or mechanical strength of the electrode sheet result when using dry roll foaming process, especially when attempting to produce relatively thick free-standing electrodes, such as those suitable for use in an aqueous hybrid ion battery. In addition, the electrode forming method described in CN1838999A is very sensitive to the introduction of additives, which will greatly affect the performance of a supercapacitor. However, for an aqueous hybrid ion battery this patent mentioned, the introduction of additives will not cause performance decrease, and it is necessary to add additives during the whole fabrication process of the electrode sheet to obtain some microscopic morphology the designed electrode.

At present, the fabrication of flexible porous free-standing thick electrode has rarely been reported. A U.S. patent (9660268 B2) mentioned a method to prepare an electrode used for alkali-ion battery, involving wet mixing of a precursor powder to form a paste, and then the wet paste is formed into a free-standing sheet of active material, which is laminated to a current collector. The positive and negative raw materials are made into an integrated electrode which, together with a separator, is assembled into a cell. The assembled cell is dried in an oven and then put into a container which is filled with an electrolyte to make a battery. The electrode fabrication process is similar to that of this invention, but the whole process of preparing the cell is carried out in a wet state. There is no mention of the performance and microstructure of the electrode, or how to control the process. In addition, a continuous large-scale preparation process is not mentioned. Needless to say, cell performance, microstructure design and control parameters of the electrode sheet are also totally different.

The main problems existing in powder formulation, microstructure design and preparation process of electrode sheet are as follows:
In addition to microstructure which requires adjustment of porosity, the morphology of particles and carbon coating can affect electrical conductivity.

1) For a dry process, it is difficult to ensure mixture uniformity, affecting the performance of a binder, and the processing parameters are hard to control. It is difficult to control the thickness of a free-standing film which is usually large than 250 µm, thus it's very hard to meet the design requirements of an electrode sheet used in an aqueous hybrid ion battery; 2) Mature method for mass production usually is wet coating process, requiring a current collector to be complexed with the electrode. Moreover, the film prepared by this method is usually thin, not self-supporting, and the loading of the active material is low, so that the process is not suitable for general use; 3) The more innovative new method has not been reported for large-scale application, especially involving the morphology design and microstructure control of the electrode; 4) To address the above issues, this invention provides a powder formulation and a method to manufacture porous self-supporting flexible thick electrode films, wherein the technology can be used to prepare aqueous ion batteries with excellent electrochemical properties.

### Summary of the Invention

To solve problems in existing technology, the present invention provides a porous free-standing flexible thick electrode, its fabrication method, and aqueous hybrid ion batteries made from said electrode.

### Brief description of the drawings

FIG. 1 shows the surface microscopic morphology of an electrode sheet.
FIG. 2 shows the microscopic morphology of a cross-section of an electrode sheet.
FIG. 3 is a drawing of a porous self-supporting flexible thick electrode product.
FIG. 4 shows a charge-discharge curve of a battery made with the exemplified electrode sheet.
FIG. 5 shows the cycle times of a battery made with the exemplified electrode sheet.

### Detailed description of the invention

The present invention provides a porous free-standing flexible thick electrode, and an aqueous hybrid ion battery made thereof. This invention also provides a porous self-supporting flexible thick electrode used in an aqueous ion battery, and its fabrication method. The self-supporting flexible thick electrode is an electrode sheet having an active material load of 0.01-2 g/cm², thickness range from 0.01 - 4 mm, porosity range from 15-60%, tensile strength range from 0.2-5 MPa, tensile elongation at break range from 5-25%, volume resistivity range from 0.1-10 Ω·cm, tolerance of pH 2-13, a width from 0.01-2 m, and an unrestricted length, up to tens of meters. The preparation method of the flexible thick free-standing electrode includes the following steps:
1) A ceramic powder and conductive agent used as raw materials for an aqueous hybrid ion battery are mixed evenly in a high-speed mixer. According to the design requirements of the micro morphology of the electrode sheet, a small amount of solvent and additives are added to the evenly mixed powder, and a paste slurry is obtained after high-speed shearing and stirring.
2) Adding a binder to the slurry and stirring for no more than 2 hours to obtain a uniform dough;
3) A continuous free-standing electrode green sheet can be obtained by rolling the dough through a roller press. The thickness and width of the electrode sheet can be adjusted according to the design requirements of the battery;
4) The electrode green sheet is dried in an oven. After drying process, a free-standing porous large-size flexible electrode sheet is obtained through refinement of the roller press again, and the size of the electrode sheet can be modified easily. Finally, an aqueous ion battery is assembled according to its design requirements and then tested.

This invention takes into consideration the properties of the positive and negative electrodes of an aqueous hybrid ion battery, by adding different proportions of solvents and additives to control the powder mixing process for the microstructure design and using different proportions of a binder to modify the performance of the electrode sheet (see table 1 below) , including but not limited to porosity of the electrode, conductivity of the electrode, flexibility of the electrode, infiltration effect of electrolyte, etc. (see examples below).

**Table 1. Performance of electrode sheet**

| | Solvent | Binder | Thickness /mm | Porosity | Resistivity / Ω^{∗}cm | Strength / Mpa |
|---|---|---|---|---|---|---|
| 1 | DI water | PTFE-0% | 2.00 | 30% | >20 | 0.1 |
| 2 | DI water | PTFE-2% | 2.00 | 35% | 10.5 | 0.24 |
| 3 | DI water | PTFE-4% | 2.00 | 38% | 1.4 | 0.95 |
| 4 | DI water | PTFE-6% | 2.00 | 42% | 0.8 | 2.8 |
| 5 | DI water | PTFE-8% | 2.00 | 45% | 1.6 | 3.5 |
| 6 | DI water | PTFE-10% | 2.00 | 50% | 8.9 | 4.7 |

The present invention provides a new semi-dry process for electrode fabrication. Compared with the traditional dry process and wet-coating process, the parameters control of the process is relatively simple and complicated machine for mass production is not needed, thus reducing the cost of production, Another advantage of this process is that the fabricated electrode sheet has extremely high flexibility, uniform surface density, and relative high mechanical strength, so that it can be made into a roll. This invention can effectively fabricate a porous thick electrode sheet on a large scale, and opens up a new direction for the large-scale manufacture of electrode sheet to be used in aqueous hybrid ion battery.

Compared with the electrode structure of traditional rechargeable battery, the present invention provides a flexible porous thick electrode, wherein the pore size distribution, effective thickness, electrolyte infiltration, electrical conductivity have all been improved (they can be adjusted according to the design requirements) because the microstructure of the electrode sheet can be designed and then controlled during the process of preparation.

A traditional electrode production method uses a wet-coating process, drying and then roll pressing, usually the electrode thickness is controlled at the micron level, a large amount of solvent is used, and the solvent is usually toxic, not environmentally friendly and difficult to recycle. The present invention provides a semi-dry process using roller pressure to roll a dough, the amount of solvent can be reduced significantly, and distilled water as solvent is a best choice without any environmental problems. At the same time, an electrode fabricated by a totally dry process without any solvent requires more complicated process control, greater environmental effect, higher accuracy of the equipment (see CN1838999A), so that the process is more unstable and high-cost. The electrode sheet prepared by this invention showed extremely high flexibility, uniform surface density, and relatively high mechanical strength. Meanwhile, the electrochemical performance of the cell is greatly improved (circulation can reach more than 3500 cycles. See example 1), With these advantages, the invention shows great potential commercial value in large-scale production of aqueous hybrid ion battery.

In one embodiment, the active material loading of the flexible thick electrode sheet ranges from 0.01-2 g/cm², preferably 1-2 g/cm², thickness ranges from 0.01-4 mm, preferably 1-3 mm, porosity ranges from 15-60%, preferably 25-50%, tensile strength ranges from 0.2-5 MPa, preferably 0.4-4 MPa, tensile elongation at break ranges from 5-25%, preferably 10-20%, volume resistivity ranges from 0.6-10 Ω^{∗}cm, preferably 2-7 Ω^{∗}cm, tolerance of pH 2-13, preferably pH= 4-12.

In one embodiment, the aqueous ion battery of the present invention comprises a cathode sheet, an anode sheet, a current collector, electrolyte, and a porous separator.

In one embodiment, the cathode of the aqueous ion battery contains ceramic powder selected from manganese oxides such as MnO₂, NaMnO₂, KMnO₂ and other polyanionic materials, such as compounds containing tetrahedral or octahedral anionic structural units, and Prussian blue analogues, such as NaMFe(CN)₆, (M=Ni, Co, Fe, Cu, etc.).

In one embodiment, the anode of the aqueous hybrid ion battery contains ceramic powder selected from NASICON type phosphate compound, such as NaTi₂(PO4)₃, Na₃V₂(PO4)₃, metal oxides such as MoO₃, Na₂V₆O₁₆, activated carbon, and Prussian blue analogues.

In one embodiment, the conductive particles of the aqueous hybrid ion battery is selected from inorganic carbon sources, preferably artificial graphite, natural graphite, active carbon, graphene, carbon black, carbon fiber and mesoporous carbon.

In one embodiment, the present invention is characterized in that the solvent used for the electrode sheet fabrication process is selected from deionized water, ethanol, and low-toxicity alcohol solvents.

In one embodiment, the present invention is characterized in that the solid content of the slurry is 60-95 wt.%, and the binder content is 2-15wt.% of the mixed powder.

In one embodiment, the present invention is characterized in that the binder for the electrode sheet fabrication process is selected from polytetrafluoroethylene (PTFE), polyvinyl butyral, polyacrylic acid, polyurethane, and cellulose, preferably PTFE.

In one embodiment, the present invention is characterized in that the PTFE mentioned above has a high molecular weight, long molecular chain which is easily fibrillizable, forming a porous structure of the electrode sheet by cross-linking of the particles.

In one embodiment, the present invention is characterized in that the additives content is not more than 10wt.%, and is divided into organic and inorganic categories. Inorganic additives are selected from silicates (such as sodium silicate) and alkaline phosphates (such as sodium tripolyphosphate, sodium hexametaphosphate and sodium pyrophosphate, etc.). Organic additives are selected from sodium dodecyl sulfate, cellulose derivatives, polyacrylates, polyols, phthalates, etc.

In one embodiment, the preparation method of the flexible thick free-standing electrode includes the following steps:
1) A ceramic powder and conductive agent used as raw materials for an aqueous hybrid ion battery are mixed evenly in a high-speed mixer. According to the design requirements of the micro morphology of the electrode sheet, a small amount of solvent and additives are added to the evenly mixed powder, and a paste is obtained after high-speed shearing and stirring.
2) Adding a binder to the paste and stirring for no more than 2 hours to give a uniform dough.
3) A continuous free-standing electrode green sheet can be obtained by rolling the dough through a roller press. The thickness and width of the electrode sheet can be adjusted according to the design requirements of the battery.
4) The electrode green sheet is dried in an oven. After drying, a free-standing porous flexible electrode sheet is obtained through refinement of the roller press again, and the size of the electrode sheet can be modified easily. Finally, an aqueous hybrid ion battery is assembled according to the design requirements and then tested.

In one embodiment of this invention, an aqueous hybrid ion battery is made from a large flexible thick, porous electrode. For steps 1) and 2), a powder is mixed using an equipment with high-speed shearing mixer blade, which ensures homogeneity of mixing despite different densities of the raw materials. After a solvent is added, the high-speed shearing blade can disperse the solvent evenly into the powder, preventing agglomeration of the powder when turning a slurry into a paste.

In one embodiment of this invention, an aqueous hybrid ion battery is made with a flexible thick, porous electrode, wherein step 3) and 4) use roller pressing to increase the plasticity of the dough and allows continuous fabrication of an electrode sheet. After drying process, because of the thickness shrinkage of the electrode sheet, further refinement of the electrode sheet should be done by roller pressing again. Control of the compression ratio of the electrode green sheet affects the strength and porosity of the final electrode, including the active material loading, etc.

Various aspects of the present invention are illustrated by the following non-limiting examples. The examples are for illustrative purposes and are not a limitation on any practice of the present invention. It is understood that variations and modifications can be made without departing from the spirit and scope of the disclosure. Reagents and materials illustrated herein are obtained from commercial sources unless otherwise indicated.

### Examples

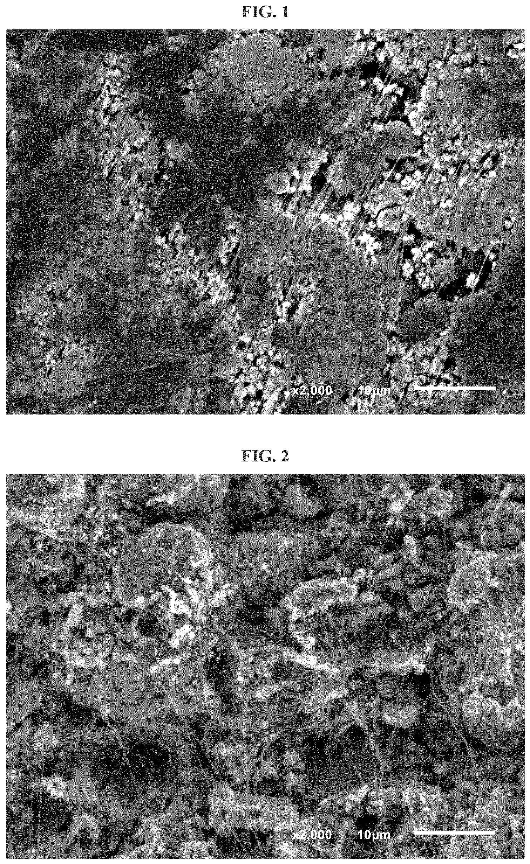

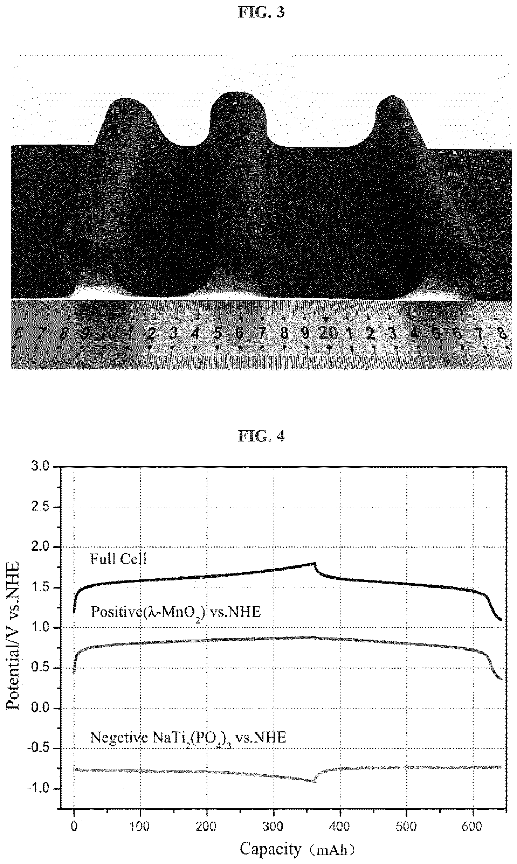

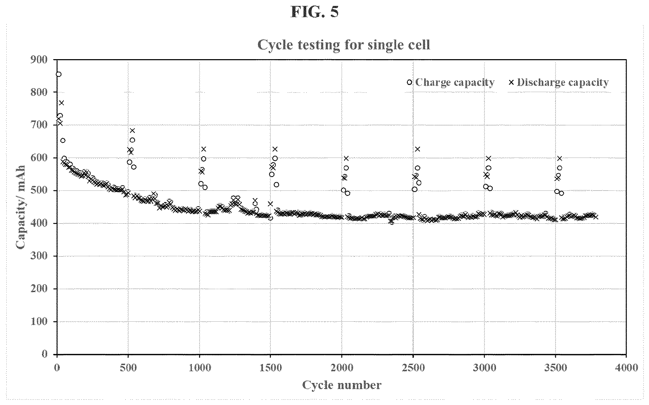

Example 1. λ-MnO2: 60 g, inorganic carbon black: 10 g, active carbon:10 g, natural graphite: 10 g as raw materials were put into a V-type conical body with high-speed shearing mixer blade, which was turned on at a rotational speed of 30Hz for 2 hours. During the mixing process, 50g of deionized water and 2g of polyacrylic acid dispersant were added while the high-speed shearing blade dispersed the solvent evenly into the powder, preventing agglomeration of the powder when forming a slurry. The rotational speed was changed to 50 Hz for 1 hour after the injection of the solvent. The slurry was then added into 8g PTFE emulsion, and the rotational speed was decreased to 10 Hz wherein stirring for no more than 30min gave a uniform paste. The uniform paste was turned into a dough by roller pressing (the diameter of the roller was 300 mm, and the gap of roller press was adjusted to 2.50 mm according to the design requirements of the electrode sheet). Finally, a free-standing electrode green sheet was obtained, and then it was dried in an oven. After drying process, because of the thickness shrinkage of the electrode sheet, further refinement of the electrode sheet should be done by roller pressing again. The microstructure of the electrode sheet is shown in FIG. 1 and FIG. 2, and a drawing of the electrode sheet product is shown in FIG. 3. According to the active material loading ratio of cathode and anode, the cathode film was refined to 1.8 mm thickness and cut into a size of 60^{∗}60 mm in length and width, the anode film was refined to 2.0 mm thickness and cut into a size of 60^{∗}60 mm in length and width. Graphite coated stainless steel was used as a current collector, a single cell was assembled by inserting a porous separator between two electrodes. Salt solution saturated with Na+/Li+ ions was added as the electrolyte for testing. After 0.1C activation, 0.2C runs for cycling test, the electrochemical charge-discharge curve and cycling performance were measured and are shown in Figure 4 and Figure 5.

Example 2. λ-MnO2: 60 g, inorganic carbon black: 10 g, active carbon: 10 g, natural graphite: 10 g as raw materials were put into a V-type conical body with high-speed shearing mixer blade, which was turned on at a rotational speed of 30Hz for 2 hours. During the mixing process, 50g of deionized water and 2g of polyacrylic acid were added, wherein the high-speed shearing blade dispersed the solvent evenly into the powder, preventing agglomeration of the powder when forming a slurry. The rotational speed was changed to 50Hz for 1 hour after the injection of the solvent. The slurry was then added into 8g PTFE emulsion, and the rotational speed was reduced to 10Hz, wherein stirring for no more than 30 min gave a uniform paste. The uniform paste was turned into a dough by roller pressing (the diameter of the roller was 300 mm, and the gap of roller press was adjusted to 2.50 mm according to the design requirements of the electrode sheet). Finally, a free-standing electrode green sheet was obtained, and then it was dried in an oven. After drying process, because of the thickness shrinkage of the electrode sheet, further refinement of the electrode sheet should be done by roller pressing again. Various properties of the electrode are shown in table 2.

**Table 2: the influence of different additives on porosity and resistivity.**

| | Solvent | Additives-2% | Binder-6% | Porosity | Resistivity /Ω^{∗}cm | Strength /MPa |
|---|---|---|---|---|---|---|
| 1 | DI Water | polyacrylic acid | PTFE | 40% | 0.5 | 1.8 |
| 2 | DI Water | sodium dodecyl sulfate | PTFE | 35% | 1.2 | 1.9 |
| 3 | DI Water | alkaline phosphates | PTFE | 32% | 1.5 | 1.5 |
| 4 | DI Water | DEHP | PTFE | 41% | 2.5 | 1.05 |
| 5 | DI Water | POE | PTFE | 45% | 3.2 | 2.4 |

References or published articles are included in this patent application to provide a more detailed description of the latest state of the art in the field related to the invention. It is also important to note that, throughout this disclosure, the transitional terms "include", "comprise" or "characterized" are synonyms, inclusive or open-ended, and do not exclude additional, unenumerated elements or method steps.

## Claims

1. A flexible electrode sheet, wherein the electrode sheet has an active material loading of 0.01 - 2 g/cm², a thickness of 0.01 - 4 mm, porosity of 15-60%, tensile strength of 0.2 - 5 MPa, tensile elongation at break of 5-25%, volume resistivity of 0.6 - 10 Ω^{∗}cm, and tolerance of pH 2-13.

2. The electrode sheet of claim 1, wherein the active material used for a cathode is selected from MnO₂, NaMnO₂, KMnO₂, compounds containing tetrahedral or octahedral anionic structural units, Prussian blue analogues, and NaMFe(CN)₆ (M = Ni, Co, Fe, or Cu).

3. The electrode sheet of claim 1, wherein the active material used for an anode is selected from phosphate compounds, NaTi₂(PO4)₃, Na₃V₂(PO₄)₃, metal oxides, MoO₃, Na₂V₆O₁₆, activated carbon, and Prussian blue analogues.

4. The electrode sheet of claim 1, wherein the material used as conductive agent of the electrode sheet is selected from inorganic carbon sources, artificial graphite, natural graphite, activated carbon, graphene, carbon black, carbon fiber, and mesoporous carbon.

5. The electrode sheet of claim 1, wherein the solvent used for fabricating the electrode sheet is selected from deionized water, ethanol, and low-toxicity alcohol solvents.

6. The electrode sheet of claim 1, wherein the amount of binder in the electrode sheet ranges from 2 - 15wt.%.

7. The electrode sheet of claim 1, wherein the electrode sheet contains a binder selected from polyethylene butyral, polyacrylic acid, polyurethane, cellulose, and polytetrafluoroethylene (PTFE).

8. The electrode sheet of claim 1, wherein the electrode sheet contains not more than 10 wt. % of additives, selected from silicate, sodium silicate, alkali metal phosphate, sodium tripolyphosphate, sodium hexametaphosphate, sodium pyrophosphate, sodium dodecyl sulfate, cellulose derivatives, polyacrylic, polyol ester, and phthalates.

9. A fabrication process for a porous flexible thick electrode sheet, comprising the following steps:
1) A ceramic powder and conductive agent used as raw materials for an aqueous hybrid ion battery are mixed evenly in a high-speed mixer, then, according to the micro morphology requirement of the electrode sheet, a small amount of solvent and additives are added to the evenly mixed powder to produce a paste slurry after high-speed shearing and stirring.
2) Adding a binder to the slurry and stirring for no more than 2 hours to give a uniform dough;
3) Rolling the micelle produces a continuous free-standing electrode green sheet, wherein the thickness and width of the sheet can be adjusted according to the design requirements of the battery;
4) The green sheet is dried in an oven and further refined and modified with a roller to produce a free-standing large-size porous flexible electrode sheet.
